# EUROPÄISCHE PATENTANMELDUNG

(11) **EP 2 322 450 A1**
(43) Veröffentlichungstag der Anmeldung: **18.05.2011**
(21) Anmeldenummer: 09175702.1
(22) Anmeldetag: 11.11.2009
(51) Int. Cl.: B65D 81/34, A23L 1/325, A47J 36/20

(54) **System für die Zubereitung eines Fischproduktes in einer Mikrowelle**

(71) Anmelder: FRoSTA Aktiengesellschaft, 27533 Bremerhaven (DE)
(72) Erfinder: Buschmann, Urban, 31535, Neustadt (DE); Holsten, Michael, 27476, Cuxhaven (DE); Finck, Ralf, 27637, Nordholz (DE)
(74) Vertreter: Fleck, Thomas

(57) **Zusammenfassung**

Die Erfindung betrifft ein System (10) für die Zubereitung eines Fischproduktes in einer Mikrowelle, sowie eine Lagerung (14) und ein paniertes Fischprodukt, insbesondere Fischstäbchen (12), für ein solches System. Handelsübliche panierte Fischstäbchen werden nur für die Zubereitung in der Friteuse, Pfanne und im Backofen angeboten. Fischstäbchen (12), die in einer Mikrowelle ansprechend zubereitet werden können, sind auf dem Markt unbekannt. Es besteht deshalb Bedarf panierte Fischprodukte, insbesondere Fischstäbchen, zur Verfügung zu stellen, die einfach und schnell in einer Mikrowelle auf eine essbare Temperatur gebracht werden können und eine allseits knusprige Panade aufweist, ohne dass Probleme bei ihrer Aufbewahrung entstehen, die die Knusprigkeit beeinträchtigen könnten. Dieser Bedarf wird durch ein System (10) befriedigt, umfassend
a. das Fischprodukt, überzogen mit einer dampfdurchlässigen Nass- und Trockenpanade,
b. wobei die Trockenpanade mit einer Feuchtigkeit abweisenden Barriereschicht aus Fett, das sich unter 0°C im festen Zustand befindet, überzogen ist,
c. eine abstützende, Luftzwischenräume (22) aufweisende, unterbrochene, vom Boden oder einem Teller in der Mikrowelle beabstandete Lagerung (14) für das Fischprodukt (Fig. 8).

## Beschreibung

Die Erfindung betrifft ein System für die Zubereitung eines Fischproduktes in einer Mikrowelle, sowie eine Lagerung und ein paniertes Fischprodukt, insbesondere Fischstäbchen, für ein solches System.

Fischstäbchen bestehen aus einem gesägten Stück Fisch, einer Nasspanade (gewöhnlich Wasser mit Mehl und ggf. Stärke) und einer Trockenpanade. Bisher wird das panierte Fischprodukt nur für die Zubereitung in der Friteuse, Pfanne und im Backofen angeboten. Die Zubereitung im Backofen ist mit deutlichen qualitativen Nachteilen verbunden. Auf dem europäischen Markt gibt es keine Fischstäbchen aus gewachsenem Muskelmaterial, die in der Mikrowelle ansprechend zubereitet werden könnten.

Die Zubereitung in der Mikrowelle ist deswegen so nachteilig, da die Erwärmung im Fisch des panierten Fischproduktes von seinem Kern her erfolgt und enthaltene Feuchtigkeit als Wasserdampf nach außen getrieben wird. Hierdurch wird die Panade "befeuchtet", wodurch die erwartete Knusprigkeit der Panade fehlt. Dieses äußert sich besonders an der Unterseite des Fischproduktes, das mit seiner planen Seite auf dem Teller liegt und regelrecht "nass" wird. Des weiteren nimmt die Trockenpanade im Laufe der Lagerung Feuchtigkeit auf, wodurch die Knusprigkeit verloren geht. Da Fischprodukte im Normalfall roh paniert werden und die Garung desselben erst bei der Zubereitung erfolgt, sind sie für die Mirowellenzubereitung bisher besonders ungeeignet.

Auf dem Markt gibt es schon panierte Fischprodukte oder Produkte im Backteig für die Mikrowellenzubereitung. Hierbei handelt sich aber um durchgegarte Produkte wie z.B. Hähnchen, die bereits ca. 40% weniger Wasser enthalten. Bei der Mikrowellenzubereitung kommt es somit nicht zu dem starken Wasseraustreiben aus dem Kern heraus in Richtung Panade. Für diese Produkte werden auf dem Markt besondere Trockenpanadensysteme angeboten.

Der Erfindung liegt deshalb die Aufgabe zugrunde, panierte Fischprodukte, insbesondere Fischstäbchen, zur Verfügung zu stellen, die einfach und schnell in der Mikrowelle auf eine essbare Temperatur gebracht werden können und zudem eine allseits knusprige Panade und keine Lagerprobleme aufweisen.

Diese Aufgabe wird erfindungsgemäß durch das System gemäß Anspruch 1 gelöst.

Einerseits wird für das System also erfindungsgemäß eine Panade geschaffen, die aus zwei bis drei Komponenten besteht, nämlich einer äußerst dünnen Nasspanade mit niedriger Auftragsmenge und einer oder zwei darüberliegenden mikrowellenfähigen Trockenpanaden mit grober und feiner Fraktion. Die Aufteilung mit grober und feiner Fraktion wird gewählt, weil die Verteilung der groben Anteile über dem Fischprodukt das Knusprigkeitsgefühl besonders unterstützt. Weiter wird die Trockenpanade und insbesondere die groben Anteile mit einer Fettschicht überzogen, wodurch eine Feuchtigkeitsbarriere entsteht, so dass bei der Lagerung keine Feuchtigkeit aufgenommen wird.

Andererseits ist es für das System erforderlich, eine besondere Lagerung für das panierte Fischprodukt zu schaffen, um dieses vom Boden oder dem Teller in der Mikrowelle beabstandet zu halten und gleichermaßen Luftzwischenräume vorzusehen, durch die der entstehende heiße Wasserdampf in die Umgebungsluft austreten kann, was am besten durch einen entsprechend gestalteten faltbaren Flachzuschnitt oder eine ziehharmonikaartige Form der Lagerung gelingt, die auseinanderziehbar ist. Der Abstand des Fischproduktes vom Teller oder Boden kann jedoch auch durch andere Konstruktionen für die Lagerung erreicht werden. So könnte man beispielsweise hierfür auch die gemeinsame Verpackung selbst mit entsprechenden Präge- oder Stanzlinien versehen, die als Knicklinien fungieren. Ebenfalls sind Perforationslinien denkbar. Die Lösungsmöglichkeit mit dem Flachzuschnitt hätte den Vorteil, dass kein zusätzlicher Platz in der Packung benötigt wird, da sich derselbe platzsparend in der Packung unter den Fischstäbchen unterbringen lässt. Hierdurch entfällt die aufwändige Vorfaltung der ziehharmonikaartigen Lagerung, da die Lagerung, die auch als Unterbau-Flachzuschnitt bezeichnet werden kann, in einem Schritt herstellbar ist.

Das erfindungsgemäße System weist vorteilhafter Weise die ideale Form einer gemeinsamen, kompakten Verpackung auf, wie sie im Anspruch 2 beschrieben ist.

Insbesondere werden vorrangig Fischsorten verwendet, die sich vorteilhaft bei der Zubereitung erwiesen haben, wie z.B. Seelachs, Pangasius. Andere Sorten sind jedoch auch geeignet.

Die Vorteile des erfindungsgemäßen Systems für eine Mikrowellenzubereitung sind:
- die Mikrowelle stellt ein etabliertes Gerät in der Küche der Verbraucher dar;
- sehr kurze Zubereitungszeit im Minutenbereich;
- fettarme Zubereitung;
- es ist fast kein Geschirr notwendig;
- auch für Kinder leicht zuzubereiten;
- die Qualität ist besser als die Zubereitung im Backofen von konventionellen Fischstäbchen.

Ferner wird die obige Aufgabe gelöst durch die Lagerung für das System gemäß Anspruch 3 und das panierte Fischprodukt für das System gemäß Anspruch 11.

Weitere vorteilhafte Merkmale gehen aus den Unteransprüchen 4-10 für die Lagerung und den Unteransprüchen 12 und 13 für das panierte Fischprodukt hervor, die auch gemeinsam mit den anderen Ansprüchen von erfindungsgemäßer Bedeutung sein können. Im Folgenden wird ein Ausführungsbeispiel zum besseren Verständnis der Erfindung im Zusammenhang mit den Figuren beschrieben, auf das die Erfindung jedoch nicht beschränkt ist. Es zeigt:
- Fig. 1: eine perspektivische Ansicht von 10 handelsüblichen aneinandergereih- ten Fischstäbchen mit einer erfindungsgemäßen Lagerung in verpackter Form;
- Fig. 2: eine perspektivische Ansicht der erfindungsgemäßen Lagerung, zum Teil aus ihrer Verpackung herausragend;
- Fig. 3: eine perspektivische Ansicht der erfindungsgemäßen Lagerung in einer etwas auseinandergezogenen Form, neben ihrer Verpackung;
- Fig. 4: eine perspektivische Ansicht von fünf Fischstäbchen, die auf einer er- findungsgemäßen etwas auseinandergezogenen Lagerung aneinander- grenzend angeordnet sind;
- Fig. 5: eine Draufsicht auf den erfindungsgemäß für die Lagerung eingesetzten Flachzuschnitt;
- Fig. 6: eine seitliche Querschnittsansicht der kurzen Seite des Flachzuschnitts im aufgeklappten Zustand und Gebrauchszustand;
- Fig. 7: eine schematische Querschnittsansicht der langen Seite des Flachzu- schnitts im aufgeklappten Zustand und Gebrauchszustand; und

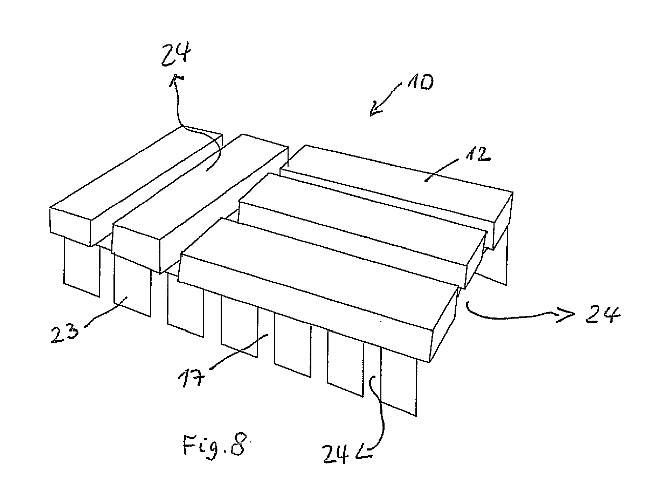

- Fig. 8: eine perspektivische Ansicht des erfindungsgemäßen Systems im Gebrauchszustand;
- Fig. 9: eine schematische Querschnittsansicht mit vergrößerter Darstellung des Eckbereiches des erfindungsgemäßen Fischproduktes in Form eines Fischstäbchens.

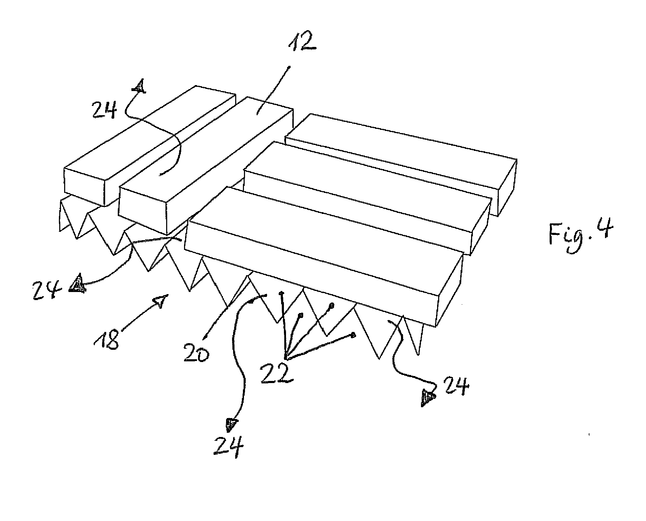

Panierte Fischstäbchen, die vorteilhafter Weise aus gesägtem Seelachs- oder Pangasiusfilet (Muskelmaterial) bestehen, das mit einer Nass- und Trockenpanade überzogen ist, werden bekannterweise meist zu 5, 10 oder 15 Stück in einer kartonartigen Verpackung im Handel tief gefroren zum Verkauf angeboten. Das erfindungsgemäße in Fig. 4 für die Zubereitung in einer nicht gezeigten, üblichen Mikrowelle vorbereitete System 10 beinhaltet jedoch nicht nur panierte Fischstäbchen 12, sondern auch eine Lagerung 14 für dieselben, die auch als Zubereitungshilfe anzusehen ist. Es ist nicht jede Panade geeignet, sondern nur eine solche, die mikrowellentauglich ist, mit einer Feuchtigkeitsbarriere aus Fett geschützt ist und aus Nass- und Trockenpanaden besteht.

Deutlich sind in Fig. 4 fünf Fischstäbchen 12 zu sehen, die derart auf der Unterlage bzw. Lagerung 14 angeordnet sind, dass sie ihre gesamte Fläche hinsichtlich Breite und Länge abdecken. Die Zubereitungszeit in einer handelsüblichen Mikrowelle (z.B. 600 W) liegt im erwarteten Bereich und beträgt für drei erfindungsgemäß panierte Fischstäbchen 12 von jeweils etwa 30g etwa 2'20". Bei einer größeren Anzahl erhöht sich der Zeitaufwand, so z.B. auf 3'50" bei 5 Fischstäbchen. Die Anzahl und Anordnungsweise der Fischstäbchen 12 auf der Lagerung 14 ist in keiner Weise kritisch, sondern kann vom Verbraucher in beliebiger Weise gewählt werden. Letzteres wird auch dadurch ermöglicht, dass die Lagerung 14 mehr oder weniger auseinandergezogen werden kann. Die Lagerung 14 ist in ihrer Längsrichtung auseinandergezogen und weist eine ziehharmonikaartige Form 18 auf, so dass die Fischstäbchen von den Spitzen 20 der Lagerung 14 in unterbrochener Weise abgestützt werden, wobei sich Luftzwischenräume 22 ausbilden, so dass der aus den Fischstäbchen 12 austretende Wasserdampf in allen Richtungen aus ihnen entweichen und sich nicht auf der Oberfläche derselben absetzen kann, wodurch anderenfalls eine unvorteilhafte Durchnässung der Panade eintreten würde. Die Pfeile 24 deuten den Wasserdampfaustritt nach oben und insbesondere nach unten durch die Luftzwischenräume 22 an. Die Lagerung 14, die man auch als Unterlage bezeichnen kann, ermöglicht es also erfindungsgemäß, dass die Fischstäbchen 12 vom Teller oder Boden der Mikrowelle abgehoben sind, so dass gerade verhindert wird, dass die untere Seite der Fischstäbchen 12 durch den Wasserdampf befeuchtet wird und durchnässt. Erfindungsgemäß wird also sichergestellt, dass die Panade des Fischstäbchens 12, die insbesondere allseits von einer feinen Trockenpanade in der Oberseite gebildet wird, die gewünschte Knusprigkeit aufweist.

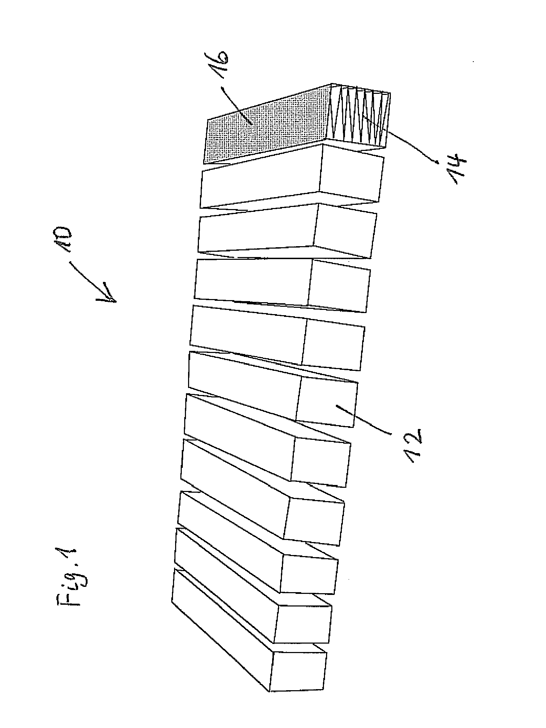

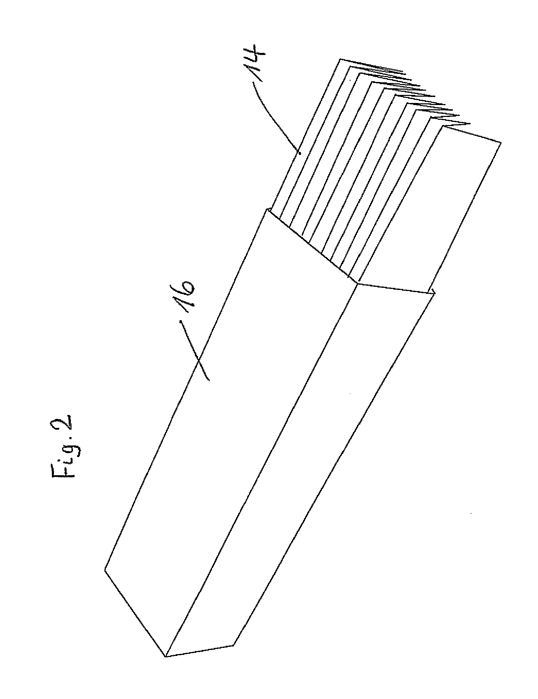

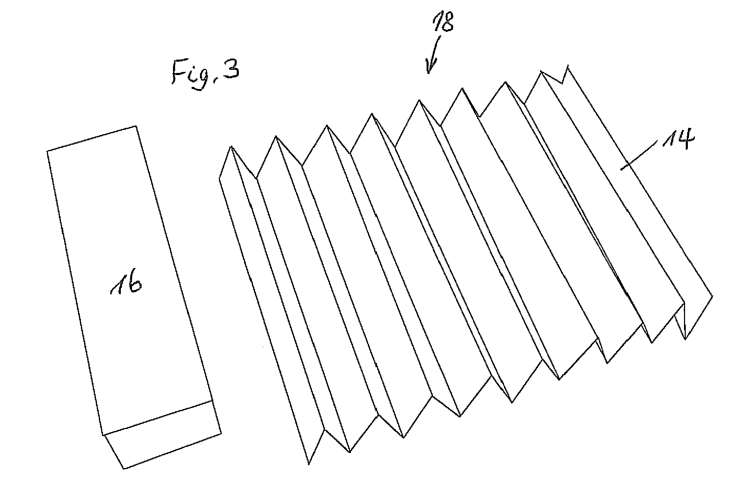

In Fig. 1 werden 10 Fischstäbchen 12 gezeigt, die aus einer nicht gezeigten üblichen karton- oder pappartigen Verpackung gemeinsam mit der verpackten Lagerung 14 ausgepackt wurden. Die Lagerung 14 ist in Form eines Abstandshalters vom Teller oder Boden der Mikrowelle gestaltet und weist im verpackten Zustand zusammengefaltet die Länge und Breite eines Fischstäbchens 12 von 9,2 x 2,1 cm auf. In Fig. 2 wird gezeigt, wie die Lagerung 14 aus der Verpackung 16 entnommen wird und dann in ihren gewünschten Gebrauchszustand für eine vorbestimmte Anzahl von Fischstäbchen auseinandergezogen ist (Fig. 3).

Es dürfte einleuchten, dass die ziehharmonikaartige Form 18 der Lagerung 16 in gewünschter Weise auf eine Mehrzahl von Fischstäbchen abgestimmt werden kann, im vorliegenden Fall 5, wobei sie eine Mindesthöhe vom nicht gezeigten Boden oder Teller von 1,3-1,5 cm nicht unterschreiten sollte.

Bei der Form 18 sind die Spitzen etwa 20mm voneinander entfernt. Andere Werte ergeben sich jedoch, wenn für eine größere Anzahl von Fischstäbchen 12 die Lagerung weiter auseinander oder bei geringerer Anzahl zusammen gezogen wird. Die Lagerung 16 besteht aus einem mikrowellenbeständigen mit Kunststoff beschichteten Karton in einer Dicke von 0,6 mm.

Die zuerst auf das Fischfilet äußerst dünn aufgetragene Nasspanade umfasst Weizenmehl, Kartoffelstärke, Wasser, Salz und Gewürze, die 13 Gew.% des panierten Fischproduktes ausmacht. Anschließend werden die mikrowellentauglichen Trockenpanaden aus Semmelbröseln aufgetragen. Die zweite, äußere Schicht der Trockenpanade weist eine feinere Körnung durch eine Fettschicht auf. Erfindungsgemäß muss die Trockenpanade gegen Feuchtigkeit geschützt sein, damit sie in der Mikrowelle eine besonders knusprige, trockene Schicht oder Kruste ausbilden, die dem üblichen sensorischen Eindruck des in der Pfanne oder Backofen gebratenen Fischstäbchens nahe kommt.

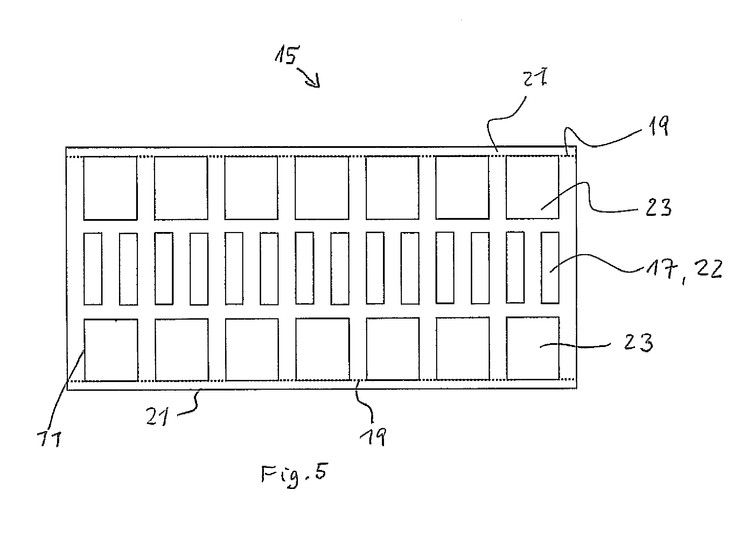

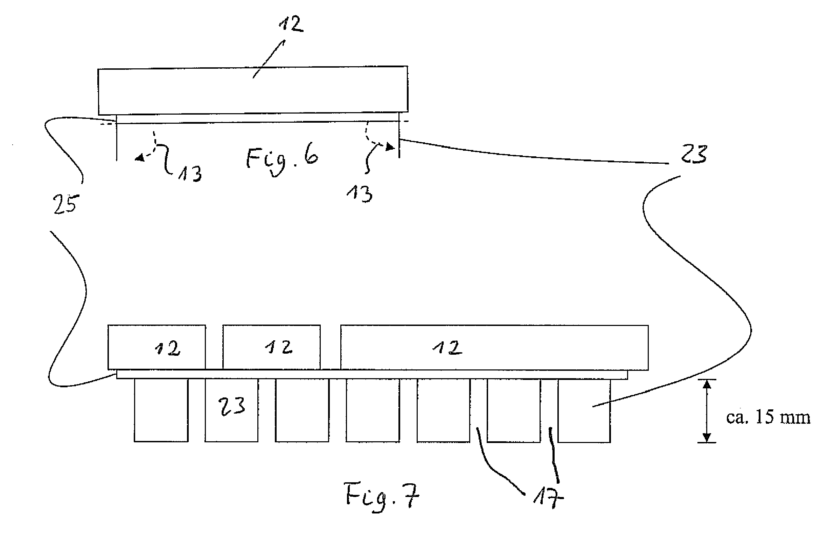

In Fig. 5 wird die erfindungsgemäße Lagerung 14 in Form eines Flachzuschnitts 15 in der Draufsicht gezeigt. Von der Form her ist der Zuschnitt rechteckig und weist Längsseiten 21 auf, die Präge-, Stanz- oder Knicklinien 19 aufweisen, die ca. 2 mm von den Längsseiten 21 beabstandet sind. An den Längsseiten sind jeweils 7 Füße 23 vorgesehen, die an drei Seiten von Perforationslinien 11 umgeben sind, so dass sie für den Gebrauchszustand in ihre senkrechte Lage gebracht werden können, wie dies durch die Pfeile 13 in Fig. 6 gezeigt ist. Anzahl und Form der Füße 23 ist nicht kritisch, so lange die Lagerung der Fischstäbchen 12 stabil genug ist. Mittig zwischen den Füßen ist eine Vielzahl von Öffnungen 17 vorgesehen, durch die der beim Erhitzen in der Mikrowelle auftretende Wasserdampf aus den Fischstäbchen 12 entweichen kann.

In den Figuren 6 und 7 ist die erfindungsgemäße Lagerung 14 allgemein im Gebrauchszustand mit aufgeklappten Füßen 23 gezeigt. Der Knicküberstand 25 beträgt etwa 2 mm, während die Höhe der Füße 23 ca. 15 mm beträgt. Andere Maßangaben sind hier jedoch auch für den Fachmann denkbar.

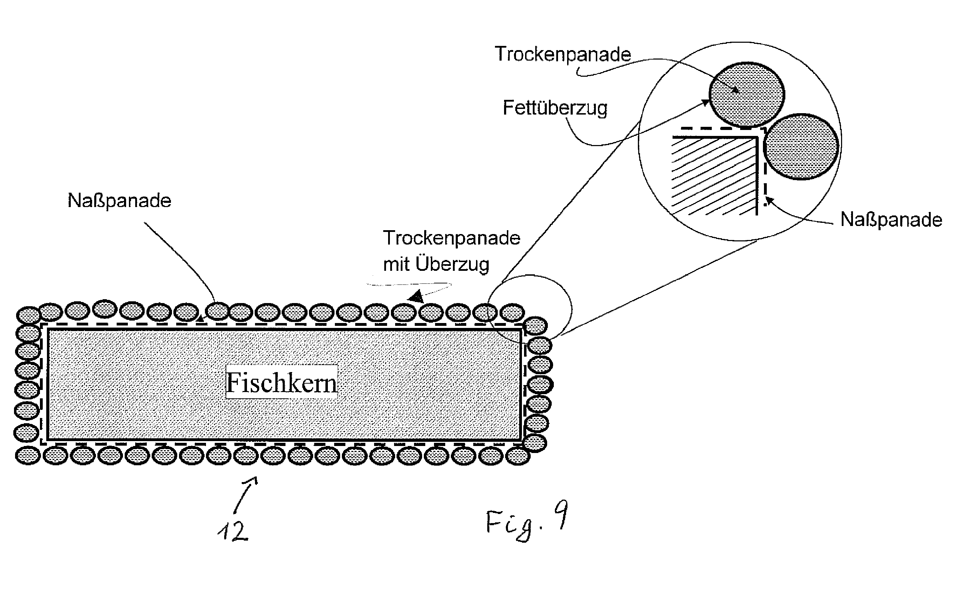

Auch ist es vorteilhaft für die Lagerung des erfinderischen Systems 10, dass das panierte Fischstäbchen 12 mit einer dünnen Palmfettschicht (Fig. 9) allseitig überzogen ist, damit seine Hygroskopizität unterbunden wird. Es ist auch möglich die Trockenpanade vor dem Auftragen auf den Fisch in Anwesenheit von Fett zu rösten und mit einer Schutzschicht überziehen oder auch die Schutzschicht direkt durch die Wahl des Fettes zu erzielen.

### Bezugszeichenliste

- System: 10
- Perforationslinien: 11
- Fischstäbchen: 12
- Pfeile: 13
- Lagerung: 14
- Flachzuschnitt: 15
- Verpackung: 16
- Öffnungen: 17
- ziehharmonikaartige Form: 1 8
- Präge- und Stanzlinien: 19
- Spritzen: 20
- Längsseiten: 21
- Luftzwischenräume: 22
- Füße: 23
- Pfeile: 24
- Knicküberstand: 25

## Patentansprüche

1. System (10) für die Zubereitung eines Fischproduktes in einer Mikrowelle, umfassend
a. das Fischprodukt, überzogen mit einer Nass- und Trockenpanade,
b. wobei die Trockenpanade mit einer Feuchtigkeit abweisenden Barriereschicht aus Fett, das sich unter 0°C im festen Zustand befindet, überzogen ist,
c. eine abstützende, Luftzwischenräume (22) aufweisende, unterbrochene, vom Boden oder einem Teller in der Mikrowelle beabstandete Lagerung (14) für das Fischprodukt.

2. System nach Anspruch 1, **gekennzeichnet durch** eine gemeinsame Verpackung für das Fischprodukt und die Lagerung (14).

3. Lagerung (14) für das System (10) nach Anspruch 1 oder 2, **dadurch gekennzeichnet, dass** diese ganz oder teilweise aus der Verpackung und/oder einem in der Verpackung beigefügtem Flachzuschnitt (15) durch Faltung herstellbar ist.

4. Lagerung (14) für das System (10) nach Anspruch 3, **gekennzeichnet durch** einen Flachzuschnitt (15), der mehrere mittige Öffnungen (17) und Knick-, Präge- oder Stanzlinien (19) parallel zu seinen Längsseiten (21) sowie Perforationslinien (11) aufweist, die unter Ausbildung von Füßen (23) ausklappbar (Pfeil 13 in Fig. 6) sind.

5. Lagerung (14) für das System (10) **gekennzeichnet durch** seine zusätzliche Verpackung (16).

6. Lagerung (14) für das System (10) nach Anspruch 1 oder 5, **gekennzeichnet durch**: eine ziehharmonikaartige Form (18), die in ihrer Längsrichtung auseinanderziehbar ist.

7. Lagerung (14) nach Anspruch 6, **dadurch gekennzeichnet, dass** die ziehharmonikaartige Form (18) hinsichtlich ihrer Breite und Länge auf eine Mehrzahl von Fischstäbchen (12) abgestimmt ist,

8. Lagerung (14) nach Anspruch 1 bis 7, **dadurch gekennzeichnet, dass** sie eine Mindesthöhe von 1,3 bis 1,5 cm aufweist.

9. Lagerung (14) nach Anspruch 6 und 7, **gekennzeichnet durch** einen Abstand ihrer Spitzen (20) voneinander von 15-25, insbesondere 20 mm bei fünf Fischstäbchen 12 auf der Lagerung 14.

10. Lagerung (14) nach Anspruch 2 bis 9, **dadurch gekennzeichnet, dass** sie aus einem mikrowellenbeständigen Material in einer Dicke von 0,4 bis 0,8 mm besteht, und eine Aluminium-Beschichtung enthalten kann.

11. Paniertes Fischprodukt, insbesondere panierte Fischstäbchen (12) für das System (10) nach Anspruch einem oder mehreren der vorstehenden Ansprüche, **gekennzeichnet durch**:
- eine Nasspanade, und
- eine mikrowellenfähige Trockenpanade in Form einer groben und darüberliegenden feinen Fraktion,
- wobei die Trockenpanade mit einer Feuchtigkeit abweisenden Barriereschicht aus Fett allseitig überzogen ist.

12. Paniertes Fischprodukt nach Anspruch 11, **gekennzeichnet**, dass es gewachsenes Muskelmaterial umfasst, insbesondere vom Seelachs- oder Pangasiusfisch.

13. Paniertes Fischprodukt nach Anspruch 11 und/oder 12, **dadurch gekennzeichnet, dass** die Feuchtigkeit abweisende Barriereschicht aus Fett auf der Trockenpanade durch ein oder mehrere im flüssigen Zustand aufgetragene Pflanzenfette gebildet wird, die bei Temperaturen unterhalb 0°C in festem Zustand sind.

14. Paniertes Fischprodukt nach Anspruch 11 und/oder 12, **dadurch gekennzeichnet, dass** die Feuchtigkeit abweisende Barriereschicht durch Eintauchen oder durch Aufsprühen des Fetts auf die Trockenpanade herstellbar ist.

15. Paniertes Fischprodukt nach einem oder mehreren der vorstehenden Ansprüche, **dadurch gekennzeichnet, dass** das oder die Fette 1 bis 6 Gew.% des paniertes Fischproduktes darstellen.

16. Paniertes Fischprodukt nach einem oder mehreren der vorstehenden Ansprüche, **dadurch gekennzeichnet, dass** das oder die Fette eine Schmelztemperatur im Bereich der Raumtemperatur, insbesondere 20°C, besitzen.

17. Paniertes Fischprodukt, insbesondere Fischstäbchen (12) für das System (10) nach Anspruch 11, **dadurch gekennzeichnet, dass** die Nasspanade, umfassend Weizenmehl, Wasser und Salz, sowie ggf. Kartoffelstärke und Gewürze, bei einem Fischstäbchen (12) in der Größe von 90 x 26 x 18 mm und 30g Gewicht in einer Auftragsmenge von 13 Gew. % vorliegt.

18. Paniertes Fischprodukt, insbesondere Fischstäbchen (12) für das System (10) nach Anspruch 11 und 17, **dadurch gekennzeichnet, dass** die Trockenpanade Semmelbrösel, insbesondere in grober und feiner darüberliegender Fraktion, umfasst.

19. Paniertes Fischprodukt nach den Ansprüchen 11 bis 18, **dadurch gekennzeichnet, dass** die Nass- und Trockenpanade wasserdampfdurchlässig, insbesondere allseitig, sind.

## Geänderte Patentansprüche

### Geänderte Patentansprüche gemäss Regel 137(2) EPÜ.

**1.** System (10) für die Zubereitung eines Fischproduktes in einer Mikrowelle, umfassend
a. das Fischprodukt, überzogen mit einer Naß- und Trockenpanade,
b. wobei die Trockenpanade mit einer Feuchtigkeit abweisenden Barriereschicht aus Fett allseitig überzogen ist,
c. eine abstützende, Luftzwischenräume (22) aufweisende, unterbrochene, vom Boden oder einem Teller in der Mikrowelle beabstandete Lagerung (14) für das Fischprodukt,
**dadurch gekennzeichnet, dass** das Fett durch ein oder mehrere im flüssigen Zustand aufgetragene Pflanzenfette gebildet wird, die unterhalb von 0°C im festen Zustand sind.

**2.** System nach Anspruch 1, **gekennzeichnet durch** eine gemeinsame Verpackung für das Fischprodukt und die Lagerung (14).

**3.** Paniertes Fischprodukt, insbesondere panierte Fischstäbchen (12) für das System (10) nach Anspruch 1,
- aufweisend eine Naßpanade und eine mikrowellenfähige Trockenpanade,
- wobei die Trockenpanade mit einer Feuchtigkeit abweisenden Barriereschicht aus Fett allseitig überzogen ist,
**dadurch gekennzeichnet**, das Fett durch ein oder mehrere im flüssigen Zustand aufgetragene Pflanzenfette gebildet wird, die unterhalb von 0°C im festen Zustand sind.

**4.** Paniertes Fischprodukt nach Anspruch 3, gekennzeichnet, dass es gewachsenes Muskelmaterial umfasst, insbesondere vom Seelachs- oder Pangasiusfisch.

**5.** Paniertes Fischprodukt nach einem der Ansprüche 3 bis 4, **dadurch gekennzeichnet, dass** die Feuchtigkeit abweisende Barriereschicht aus Fett auf der Trockenpanade durch ein oder mehrere im flüssigen Zustand aufgetragene Pflanzenfette gebildet wird, die bei Temperaturen unterhalb 0°C in festem Zustand sind.

**6.** Paniertes Fischprodukt nach einem der Ansprüche 3 bis 5, **dadurch gekennzeichnet, dass** das oder die Fette 2 bis 6 Gew.% des paniertes Fischproduktes darstellen.

**7.** Paniertes Fischprodukt nach einem der Ansprüche 3 bis 6, **dadurch gekennzeichnet, dass** das oder die Fette eine Schmelztemperatur im Bereich von 15 bis 25°C, insbesondere 20°C, besitzen.

**8.** Paniertes Fischprodukt nach einem der Ansprüche 3 bis 7, **dadurch gekennzeichnet, dass** die Naßpanade, umfassend Weizenmehl, Wasser und Salz, sowie ggf. Kartoffelstärke und Gewürze, bei einem Fischstäbchen (12) in der Größe von 92 x 62 x 21 mm und 30g Gewicht in einer Auftragsmenge von 13 Gew.% vorliegt.

**9.** Paniertes Fischprodukt nach einem der Ansprüche 3 bis 8, **dadurch gekennzeichnet, dass** die Trockenpanade Semmelbrösel, insbesondere in grober und feiner darüberliegender Fraktion, umfasst.

**10.** Paniertes Fischprodukt nach einem der Ansprüche 3 bis 9, **dadurch gekennzeichnet, dass** die Nass- und Trockenpanade wasserdampfdurchlässig, insbesondere allseitig, sind.

**11.** Paniertes Fischprodukt nach einem der Ansprüche 3 bis 10, **dadurch gekennzeichnet, dass** die Trockenpanade in Form einer groben und darüberliegenden feinen Fraktion gebildet ist.
